(19) **Europäisches Patentamt**
**European Patent Office**
**Office européen des brevets**

(11) **EP 2 366 257 B1**

(12) **EUROPEAN PATENT SPECIFICATION**

(45) Date of publication and mention
of the grant of the patent:
**14.11.2012 Bulletin 2012/46**

(51) Int Cl.:
***H04W 28/26*** *(2009.01)*

(21) Application number: **09748582.5**

(86) International application number:
**PCT/US2009/061107**

(22) Date of filing: **16.10.2009**

(87) International publication number:
**WO 2010/053679 (14.05.2010 Gazette 2010/19)**

(54) **METHODS AND SYSTEMS FOR FAST NETWORK ENTRY AND RE-ENTRY IN MULTIPLE ACCESS NETWORKS**

VERFAHREN UND SYSTEME FÜR SCHNELLEN NETZWERKEINTRITT UND NEUEINTRITT IN MEHRERE ZUGANGSNETZWERKE

PROCÉDÉS ET SYSTÈMES PERMETTANT UNE ENTRÉE ET NOUVELLE ENTRÉE RAPIDES DANS DES RÉSEAUX À ACCÈS MULTIPLES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.11.2008 US 112142 P**
**13.10.2009 US 577786**

(43) Date of publication of application:
**21.09.2011 Bulletin 2011/38**

(73) Proprietor: **QUALCOMM Incorporated**
**San Diego, California 92121-1714 (US)**

(72) Inventors:
• **KIM, Doo Seok**
**San Diego**
**California 92121-1714 (US)**

• **PARK, Jong Ro**
**San Diego**
**California 92121-1714 (US)**
• **KIM, Je Woo**
**San Diego**
**California 92121-1714 (US)**

(74) Representative: **Schmidbauer, Andreas Konrad**
**Wagner & Geyer**
**Patent- und Rechtsanwälte**
**Gewürzmühlstrasse 5**
**80538 München (DE)**

(56) References cited:
**EP-A- 0 912 016        EP-A- 1 916 862**
**WO-A-00/52950        WO-A-98/24250**
**WO-A-2007/039431        US-A1- 2007 002 819**

**Description**

TECHNICAL FIELD

The present disclosure generally relates to communication, and more specifically, to reducing network entry and network re-entry delay for map-based demand assigned multiple access (DAMA) communication systems.

Attention is drawn to WO 98/24250 A2 which describes a communications system that uses a multiple access packet reservation type of protocol. The physical channels required for the packet transfers are specially allocated to one mobile station (referred to as a "VIP MS"). The VIP MS has the exclusive priority to use these allocated physical channels for packet data as needed. Consequently, the VIP MS always has the negotiated bandwidth available for the packet transfers. Furthermore, since the VIP MS is given the highest exclusive priority to access these physical channels ("VIP priority"), by allocating a reserved random access channel dedicated to the VIP MS (e.g., on one allocated uplink channel), the variable random access delays experienced by prior systems no longer exist.; Since the VIP MS is always scheduled first for transmissions on the downlink, and reserved access is provided for the VIP MS on the uplink, only a constant delay period for the uplink and downlink is involved. In other words, the VIP MS is guaranteed both a bandwidth for the packet transfers and a constant uplink and downlink delay.

Attention is further drawn to EP 0 912 016 A2 which describes a method for access control in a wireless network having a base station and a plurality of remote hosts that includes the optional abilities of making dynamic adjustments of the uplink/downlink transmission ratio, making dynamic adjustments of the total number of reservation minislots, and assigning access priorities by message content type within a single user message stream. The method further provides for remote wireless host paging and for delayed release of active channels by certain high priority users in order to provide low latency of real-time packets by avoiding the need for repeated channel setup signaling messages. There are N minislots available for contention in the next uplink frame organized into a plurality of access priority classes. The base station allows m access priority classes. Each remote host of access priority class i randomly picks one contention minislot and transmits an access request, the contention minislot picked being in a range from 1 to $N_i$ where $N_{(i+1)} < N_i$ and $N_1=N$. In an alternate aspect of a method for access control, each remote host of access priority class i and with a stack level that equals 0, then transmits an access request with a probability $P_i$ where $P_{(i+1)} < P_i$ and $P_1=1$.

Attention is also drawn to WO 00/52950 A1 which describes systems and methods for transmitting data over transmission bandwidth in a communication channel over a wireless network through asynchronous, reservation-oriented, multiple access to support real-time multimedia. The access to a transmission bandwidth in a communications channel is guaranteed (or reserved) from a terminal to a server by establishing a reserved bandwidth for a transmission in an on-demand, as-desired manner. A terminal reserves bandwidth with a server by corresponding with the server to reserve a finite bandwidth for transmissions of a data packet. A server recognizes the request for a finite bandwidth and approves the request, if capacity permits. Once a request has been approved, the systems and methods provide for reserved access to transmission bandwidth in a communications channel to support real-time network applications, including transactions involving wireless local area networks, cellular networks, and ad hoc networks.

Attention is drawn to US 2007/002819 A1 which provides a reservation protocol to enable a client mobile station to make a number of reservations with a number of access points to facilitate its access of a network at a future point in time, as it roams, and subsequently exercise one of the reservations

SUMMARY

In accordance with the present invention a method, and an apparatus, as set forth in the independent claims, respectively, are provided. Preferred embodiments of the invention are described in the dependent claims.

Certain embodiments provide a method for requesting uplink bandwidth by a subscriber station in a wireless communication system. The method generally includes transmitting a request message including a bandwidth reservation for at least one uplink allocation for at least one subsequent request message to be transmitted, receiving a response message and at least one uplink allocation for the at least one subsequent request message, and transmitting the at least one subsequent request message, in accordance with the at least one uplink allocation received via the response message.

Certain embodiments provide a method for allocating an uplink bandwidth to a subscriber station in a wireless communications system. The method generally includes receiving a request message including a bandwidth reservation for at least one uplink allocation for a subsequent request message to be transmitted, transmitting a response message and at least one uplink allocation for the at least one subsequent request message, and receiving the at least one subsequent request message, in accordance with the at least one uplink allocation transmitted via the response message.

Certain embodiments provide an apparatus for requesting uplink bandwidth by a subscriber station in a wireless communication system. The apparatus generally includes logic for transmitting a request message including a bandwidth reservation for at least one uplink allocation for at least one subsequent request message to be transmitted, logic for receiving a response message and at least one uplink allocation for the at least one subsequent request message, and logic for transmitting the at least one subsequent request message, in accordance with the at least one uplink allocation received via the response message.

Certain embodiments provide an apparatus for allocating an uplink bandwidth to a subscriber station in a wireless communications system. The apparatus generally includes logic for receiving a request message including a bandwidth reservation for at least one uplink allocation for a subsequent request message to be transmitted, logic for transmitting a response message and at least one uplink allocation for the at least one subsequent request message, and logic for receiving the at least one subsequent request message, in accordance with the at least one uplink allocation transmitted via the response message.

Certain embodiments provide an apparatus for requesting uplink bandwidth by a subscriber station in a wireless communication system. The apparatus generally includes means for transmitting a request message including a bandwidth reservation for at least one uplink allocation for at least one subsequent request message to be transmitted, means for receiving a response message and at least one uplink allocation for the at least one subsequent request message, and means for transmitting the at least one subsequent request message, in accordance with the at least one uplink allocation received via the response message.

Certain embodiments provide an apparatus for allocating an uplink bandwidth to a subscriber station in a wireless communications system. The apparatus generally includes means for receiving a request message including a bandwidth reservation for at least one uplink allocation for a subsequent request message to be transmitted, means for transmitting a response message and at least one uplink allocation for the at least one subsequent request message, and means for receiving the at least one subsequent request message, in accordance with the at least one uplink allocation transmitted via the response message.

Certain embodiments of the present disclosure provide a computer-program product for requesting uplink bandwidth by a subscriber station in a wireless communication system, comprising a computer readable medium having instructions stored thereon, the instructions being executable by one or more processors. The instructions generally include instructions for transmitting a request message including a bandwidth reservation for at least one uplink allocation for at least one subsequent request message to be transmitted, instructions for receiving a response message and at least one uplink allocation for the at least one subsequent request message, and instructions for transmitting the at least one subsequent request message, in accordance with the at least one uplink allocation received via the response message.

Certain embodiments of the present disclosure provide a computer-program product for allocating an uplink bandwidth to a subscriber station in a wireless communications system, comprising a computer readable medium having instructions stored thereon, the instructions being executable by one or more processors. The instructions generally include instructions for receiving a request message including a bandwidth reservation for at least one uplink allocation for a subsequent request message to be transmitted, instructions for transmitting a response message and at least one uplink allocation for the at least one subsequent request message, and instructions for receiving the at least one subsequent request message, in accordance with the at least one uplink allocation transmitted via the response message.

BRIEF DESCRIPTION OF THE DRAWINGS

Aspects and embodiments of the disclosure will become more apparent from the detailed description set forth below when taken in conjunction with the drawings in which like reference characters identify correspondingly throughout.

Figure 1 illustrates an exemplary wireless communication system in accordance with certain embodiments set forth herein;

Figure 2 illustrates an exemplary wireless network environment in accordance with certain embodiments set forth herein;

Figure 3 illustrates example operations for a subscriber station for requesting bandwidth reservations in accordance with certain embodiments set forth herein;

Figure 3A illustrates example components capable of performing the operations shown in FIG. 3;

Figure 4 illustrates example operations for a base station sending a response message that includes an uplink allocation;

Figure 4A illustrates example components capable of performing the operations shown in FIG. 4;

Figure 5 illustrates example message exchange for an interactive bandwidth request reservation (IBW-RSVP) in accordance with certain embodiments set forth herein; and

Figure 6 illustrates example message exchange for a non-interactive bandwidth request reservation (NBW-RSVP) in accordance with certain embodiments set forth herein.

DETAILED DESCRIPTION

Certain embodiments are described herein with reference to the drawings, wherein like reference numerals are used to refer to like elements throughout. In the following description, for purposes of explanation, numerous specific details are set forth in order to provide a thorough understanding of certain embodiments. However, it may be that such embodiment(s) can be practiced without these specific details. In other instances, well-known structures and devices are shown in block diagram form in order to facilitate describing certain embodiments.

In a communication system utilizing Demand Assigned Multiple Access (DAMA) technology, a base station (BS) assigns bandwidth, communication channels or circuits based on the requests issued from subscriber stations (SS). In map-based DAMA systems, such as WiMAX (Worldwide Interoperability for Microwave Access) and DOCSIS (Data over cable service interface specification), the BS uses DL-MAP and UL-MAP messages to send information about downlink (DL) and uplink (UL) resource assignments to the SS, respectively. The DL-MAP may include information such as a start location, an assigned sub-channel and duration of transmission for a downlink data burst. The UL-MAP may include information such as an assigned sub-channel, a start location and length of uplink allocation.

In MAP-based DAMA systems, an SS should send a bandwidth request (BR) message before sending data or management packets to a BS. It should be noted that the UGS (Unsolicited Grant Service) QoS (Quality of Service) class is an exception for the bandwidth request requirement in a WiMAX network. Upon receiving a BR message, the BS sends a bandwidth grant (BG) to the SS through a UL-MAP message if there is available bandwidth resource.

When an SS is synchronized with a BS via the physical layer, the SS still should go through a plurality of stages with a medium access control (MAC) layer to be able to transmit and receive data packets. The MAC layer stages may include Code Division Multiple Access (CDMA) ranging, initial ranging, capability negotiation, secure key exchanges (i.e., privacy key management), registration, and dynamic service flow. These initial procedures are part of the Network Entry (NE) process. Similarly, Network Re-entry (NRE) procedures are required for re-entering network during Handover (HO) or after Idle Mode exit.

Each stage in network entry and network reentry procedures may involve MAC management message exchange. Furthermore, the SS should send a bandwidth request and should wait for a bandwidth grant before transmitting these management messages during each network entry and network reentry stage. Therefore, the total network entry delay consists of not only protocol process time, but also bandwidth request and bandwidth grant latency at each stage.

A long delay in network entry initialization results in a long waiting time for an SS that is waiting to access network services. Similarly, a long delay in network reentry initialization causes a long service disruption period when an SS is either performing a handover to a target BS or exiting from an idle mode. The latency of the network entry and network re-entry may also adversely affect quality of network services in terms of user experience.

Exemplary Wireless Communication System

The techniques described herein may be used for various broadband wireless communication systems, including communication systems that are based on an orthogonal multiplexing scheme. Examples of such communication systems include Orthogonal Frequency Division Multiple Access (OFDMA) systems, Single-Carrier Frequency Division Multiple Access (SC-FDMA) systems, and so forth. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

One example of a communication system based on an orthogonal multiplexing scheme is a WiMAX system. WiMAX, which stands for the Worldwide Interoperability for Microwave Access, is a standards-based broadband wireless technology that provides high-throughput broadband connections over long distances. There are two main applications of WiMAX today: fixed WiMAX and mobile WiMAX. Fixed WiMAX applications are point-to-multipoint, enabling broadband access to homes and businesses, for example. Mobile WiMAX is based on OFDM and OFDMA, and offers the full mobility of cellular networks at broadband speeds.

IEEE 802.16x is an emerging standard organization to define an air interface for fixed and mobile broadband wireless access (BWA) systems. These standards defined at least four different physical layers (PHYs) and one medium access control (MAC) layer. The OFDM and OFDMA physical layer of the four physical layers are the most popular in the fixed and mobile BWA areas respectively.

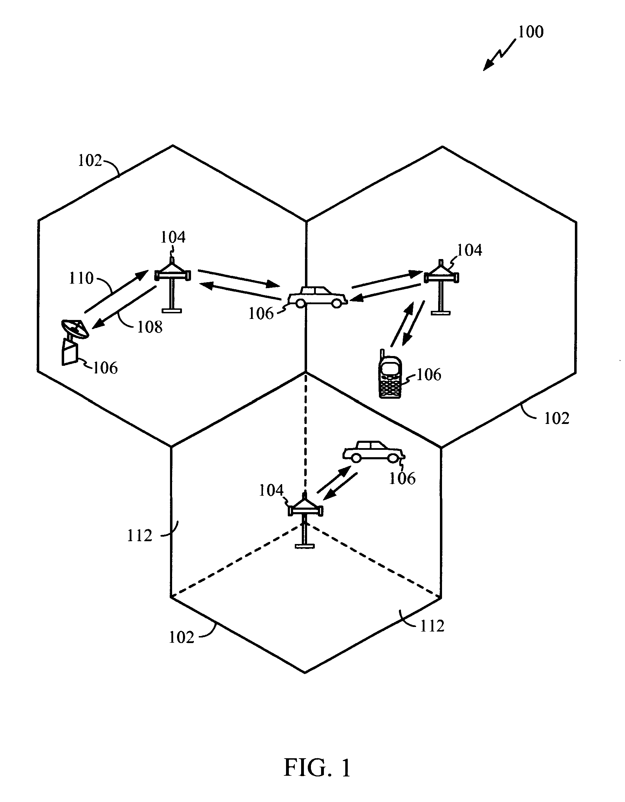

Figure 1 illustrates an exemplary wireless communication system 100 in accordance with certain embodiments set forth herein. Wireless communication system 100 may be a broadband wireless communication system. The term "broadband wireless" refers to technology that at least provides wireless, audio, video, voice, Internet, and/or data network access. Wireless communication system 100 provides communication for one or more cells 102, each of which is serviced by a base station 104. Base station 104 may be a fixed station that communicates with user terminals 106 within cell 102 serviced by that base station 104. Base station 104 may alternatively be referred to as an access point, Node B or some other terminology.

As shown in Figure 1, various user terminals 106 dispersed throughout wireless communication system 100. User terminals 106 may be fixed (i.e., stationary), mobile or capable of both. User terminals 106 may alternatively be referred to as remote stations, access terminals, terminals, subscriber units, mobile stations, stations, user equipment and the like. User terminals 106 may be personal wireless devices, such as cellular phones, personal digital assistants (PDAs), handheld devices, wireless modems, audio/video players, laptop computers, personal computers, other handheld communication devices, other handheld computing devices, satellite radios, global positioning systems, and so on. A variety of algorithms and methods may be used for transmissions in wireless communication system 100 between base stations 104 and user terminals 106. For example, signals may be sent and received between base stations 104 and user terminals 106 in accordance with OFDM/OFDMA techniques. If this is the case, wireless communication system 100 may be referred to as an OFDM/OFDMA system 100.

A communication link that facilitates transmission from base station 104 to user terminal 106 may be referred to as a downlink 108, and a communication link that facilitates transmission from user terminal 106 to base station 104 may be referred to as an uplink 110. Alternatively, downlink 108 may be referred to as a forward link or a forward channel, and uplink 110 may be referred to as a reverse link or a reverse channel. Cell 102 may be divided into multiple sectors 112. Sector 112 is a physical coverage area within cell 102. Base stations 104 within an OFDM/OFDMA system 100 may utilize antennas that concentrate the flow of power within a particular sector 112 of the cell 102. Such antennas may be referred to as directional antennas.

In certain embodiments, system 100 can be a multiple-input multiple-output (MIMO) communication system. Further, system 100 can utilize substantially any type of duplex technique to divide communication channels (e.g., forward link 108, reverse link 110, etc.) such as FDD, TDD, and the like. The channels can be provided for transmitting control data between user terminals 106 and respective base stations 104.

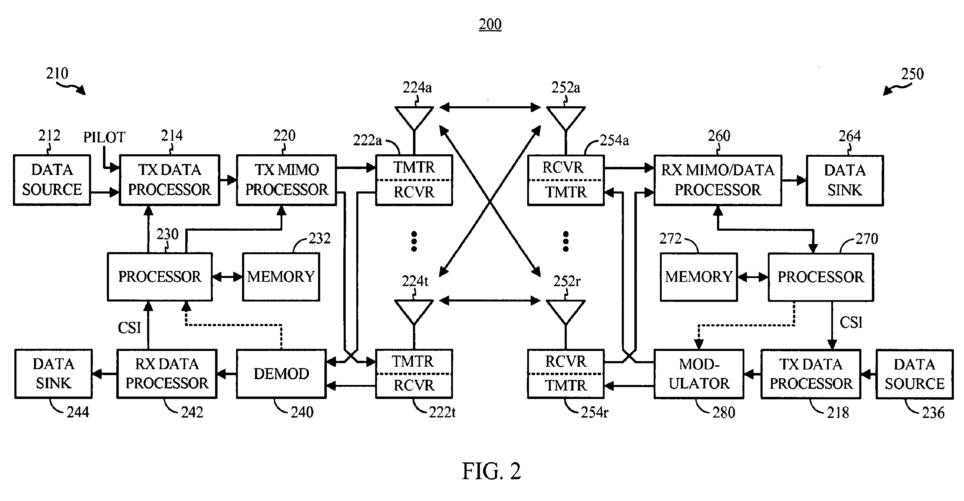

Figure 2 illustrates an exemplary wireless network environment 200 in accordance with certain embodiments set forth herein. Wireless network environment 200 depicts one base station 210 and one mobile device 250 for sake of brevity. However, it is contemplated that system 200 can include one or more base stations and/or one or more mobile devices, wherein additional base stations and/or mobile devices can be substantially similar or different from illustrated base station 210 and illustrated mobile device 250 described herein. In addition, it is contemplated that base station 210 and/or mobile device 250 can employ the systems, techniques, configurations, embodiments, aspects, and/or methods described herein to facilitate wireless communication between them.

At base station 210, traffic data for a number of data streams is provided from a data source 212 to a transmit (TX) data processor 214. In certain embodiments, each data stream can be transmitted over a respective antenna and/or over multiple antennas. TX data processor 214 formats, codes, and interleaves the traffic data stream based on a particular coding scheme selected for that data stream to provide coded data.

The coded data for each data stream can, for example, be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at mobile device 250 to estimate channel response or other communication parameters and/or characteristics. The multiplexed pilot and coded data for each data stream can be modulated (e.g., symbol mapped) based on a particular modulation scheme (e.g., binary phase-shift keying (BPSK), quadrature phase-shift keying (QPSK), M-phase-shift keying (M-PSK), M-quadrature amplitude modulation (M-QAM), etc.) selected for that data stream to provide modulation symbols. The data rate, coding, and modulation for each data stream can be determined by instructions performed or provided by processor 230.

The modulation symbols for the data streams can be provided to a TX MIMO processor 220, which can further process the modulation symbols (e.g., for OFDM). TX MIMO processor 220 then provides $N_t$ modulation symbol streams to Nt transmitters (TMTR) 222a through 222t. In certain embodiments, TX MIMO processor 220 applies certain multi-antenna techniques, such spatial multiplexing, diversity coding or precoding (i.e., beamforming, with weights being applied to the modulation symbols of the data streams and to the antenna from which the symbol is being transmitted).

Each transmitter 222 receives and processes a respective modulation symbol stream to provide one or more analog signals, and further conditions (e.g., amplifies, filters, upconverts, etc.) the analog signals to provide a modulated signal suitable for transmission over the MIMO channel. Further, $N_t$ modulated signals from transmitters 222a through 222t are transmitted from $N_t$ antennas 224a through 224t, respectively.

At mobile device 250, the transmitted modulated signals are received by Nr antennas 252a through 252r and the received signal from each antenna 252 is provided to a respective receiver (RCVR) 254a through 254r. Each receiver 254 conditions (e.g., filters, amplifies, downconverts, etc.) a respective signal, digitizes the conditioned signal to provide samples, and further processes the samples to provide a corresponding "received" symbol stream.

A receive (RX) data processor 260 can receive and process the Nr received symbol streams from Nr receivers 254 based on a particular receiver processing technique to provide $N_t$ "detected" symbol streams. RX data processor 260 can demodulate, deinterleave, decode each detected symbol stream to recover the traffic data for the data stream, and provide the traffic data to a data sink 262. In certain embodiments, for mobile device 250, the processing by RX data processor 260 can be complementary to that performed by TX MIMO processor 220 and TX data processor 214 at base station 210.

A processor 270 can periodically determine which precoding matrix to utilize as discussed above. Further, processor 270 can formulate a reverse link message comprising a matrix index portion and a rank value portion. The reverse link message can comprise various types of information regarding the communication link and/or the received data stream. The reverse link message can be processed by a TX data processor 238, which also receives traffic data for a number of data streams from a data source 236, modulated by a modulator 280, conditioned by transmitters 254a through 254r, and transmitted back to base station 210.

At base station 210, the modulated signals from mobile device 250 are received by $N_t$ antennas 224, conditioned by respective $N_t$ receivers 222, demodulated by a demodulator 240, and processed by a RX data processor 242 to extract the reverse link message transmitted by mobile device 250, and provide the reverse link message to a data sink 244. Further, processor 230 can process the extracted message to determine which precoding matrix to use for determining the beamforming weights.

Processors 230 and 270 can direct (e.g., control, coordinate, manage, etc.) operation at base station 210 and mobile device 250, respectively. Respective processors 230 and 270 can be associated with memory 232 and 272 that store program codes and data. Processors 230 and 270 can also perform computations to derive frequency and impulse response estimates for the uplink and downlink, respectively. All "processor" functions can be migrated between and among process modules such that certain processor modules may not be present in certain embodiments, or additional processor modules not illustrated herein may be present.

Memory 232 and 272 (as with all data stores disclosed herein) can be either volatile memory or nonvolatile memory or can include both volatile and nonvolatile portions, and can be fixed, removable or include both fixed and removable portions. By way of illustration, and not limitation, nonvolatile memory can include read only memory (ROM), programmable ROM (PROM), electrically programmable ROM (EPROM), electrically erasable PROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink™ DRAM (SLDRAM), and direct Rambus™ RAM (DRRAM). Memory of the certain embodiments is intended to comprise, without being limited to, these and any other suitable types of memory.

Exemplary Bandwidth Reservation for Fast Network Entry and Network Re-entry

In map-based Demand Assigned Multiple Access (DAMA) systems, each network entry stage involves transmission of a bandwidth request (BR) message and reception of a bandwidth grant (BG) message by a subscriber station (SS) before transmitting an over-the-air (OTA) message to a base station. The BR-BG message exchange may include a code division multiple access (CDMA) bandwidth request transmission, a CDMA allocation reception, a bandwidth request message transmission, and reception of a bandwidth grant message, which shows the allocated uplink resources.

Certain embodiments of the present disclosure provide techniques that may significantly reduce the network entry and network reentry delays for MAP-based demand assigned multiple access communication systems.

Certain embodiments provided herein assume that the SS knows the next sequences to take during a network entry or network reentry. This assumption may hold to be true for standard protocols since all standards specify deterministic sequences to follow for a given condition.

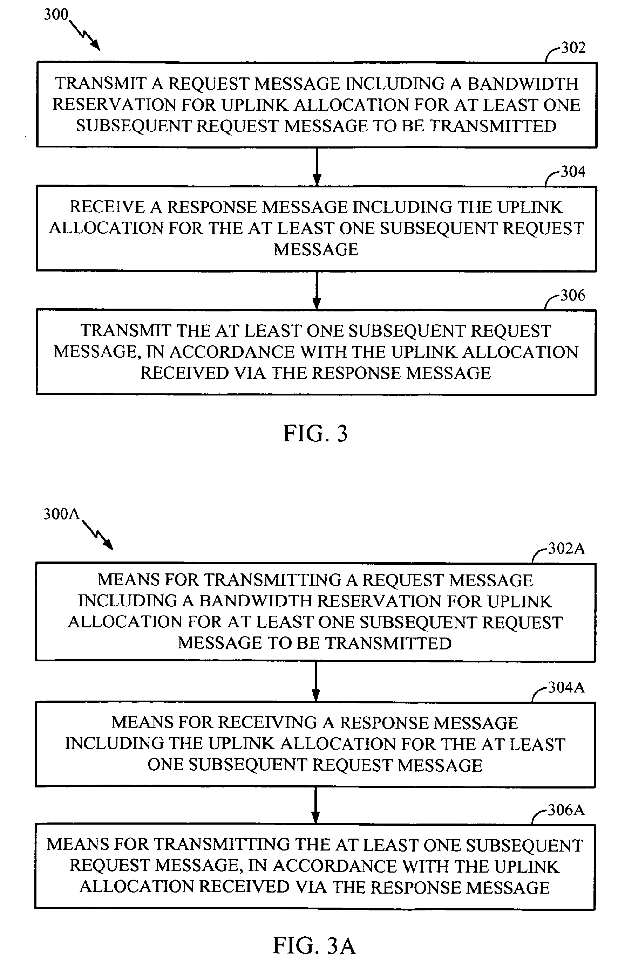

Figure 3 illustrates example operations 300 for an SS requesting bandwidth reservations in accordance with certain embodiments set forth herein. At 302, an SS transmits a request (REQ) message that includes a request for bandwidth reservation (BW-RSVP) for an uplink allocation.

For certain embodiments of the present disclosure, the REQ message may include the bandwidth reservation information for a single subsequent management message (i.e., a request message) to be transmitted to the BS. This approach is herein referred to as interactive bandwidth reservation (IBW-RSVP).

For certain embodiments, the SS may transmit bandwidth reservation information for all of the subsequent management messages to be transmitted to the BS in a single management REQ message. This approach is herein referred to as non-interactive bandwidth reservation (NBW-RSVP).

At 304, the SS receives a response message and a UL-MAP message in a downlink subframe, which contains the uplink allocation for the subsequent management message. At 306, the SS transmits the subsequent management message in accordance with the uplink allocation.

In one embodiment, the bandwidth reservation information may be embedded in the payload of a medium access control (MAC) management message using a type length value (TLV) format. For example, the bandwidth reservation information may use a Vendor-Specific TLV.

The bandwidth reservation information may be included in any type of MAC management message. For example, during a network entry or reentry, the bandwidth reservation may be included in a Ranging Request (RNG_REQ) message, an SS Basic Capabilities Request (SBC_REQ) message, a Private Key Management Request (PKM_REQ) message, a Registration Request (REG_REQ) message or a Dynamic Service Add/Change/Delete Request (DSA_REQ, DSC_REQ, DSD_REQ) message.

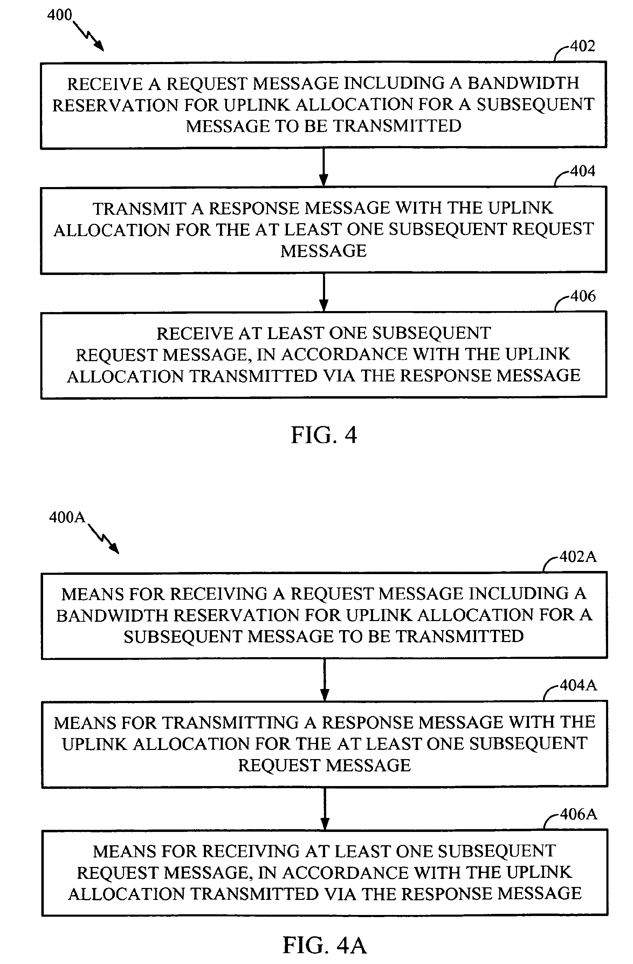

Figure 4 illustrates example operations 400 for a BS sending a response message that includes an uplink allocation to an SS. At 402, the BS receives a management request message that includes a bandwidth reservation for an uplink allocation. The bandwidth reservation may be either for a subsequent management message or for all subsequent management messages to be transmitted to the BS. At 404, the BS transmits a response message and a UL-MAP message, which contains the uplink allocation for the subsequent management message to the SS. At 406, the BS receives the subsequent management message in accordance with the uplink allocation.

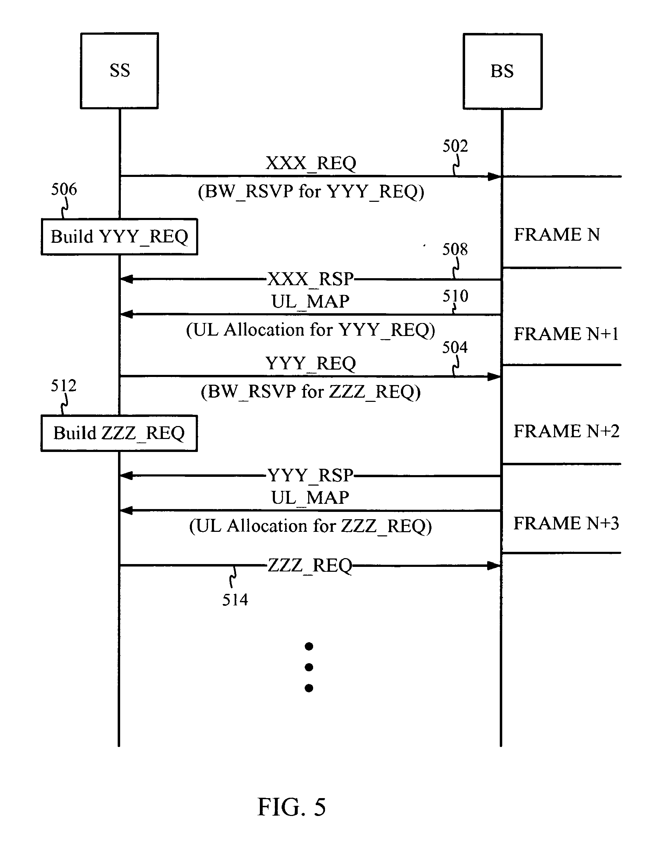

Figure 5 illustrates example message exchange for an interactive bandwidth request reservation in accordance with certain embodiments set forth herein. In IBW-RSVP, an SS transmits a request message that may include a bandwidth reservation for the next message to be transmitted. For example, as shown, XXX_REQ message 502 may also reserve bandwidth for the next message (i.e., YYY_REQ 504). For certain embodiments, the SS may specify the number of bytes and frame offset required to send the next management message in the bandwidth reservation information.

The frame offset sent by the SS may be used by the BS to determine the bandwidth grant (BG) offset in uplink. Therefore, the BS may use the frame offset and the MAP minimum relevance when assigning bandwidth to the SS. The assigned bandwidth (i.e., BG) is sent to the SS through the UL-MAP message. For example, if the frame offset is equal to zero, the BG offset may be determined based on the UL-MAP minimum relevance which is a parameter specified in standards. On the other hand, if the frame offset is more than zero, the BS adds the frame offset to the BG offset.

Upon receiving the XXX_REQ message 502 from the SS, the BS parses the XXX_REQ message 502 and determines if there is bandwidth reservation (BW-RSVP) information in the XXX_REQ 502 message. Meanwhile, the SS may build (506) a request message for the next procedure to be transmitted to the BS based on the current state information of the SS, before receiving an uplink allocation for the next REQ message from the BS. For example, the SS may build 506 YYY_REQ message while waiting to receive uplink allocation for it.

Once the BS detects the BW-RSVP information, the BS allocates uplink resources for the next REQ message (e.g., YYY_REQ 504). The BS uses the BW-RSVP information, such as the number of bytes and frame offset required to send the next management message, and allocates the requested uplink resources to the SS. The BS notifies the SS about the allocated uplink resources by transmitting a UL-MAP message 510 along with a response (e.g., XXX_RSP message 508) to the REQ message.

In IBW-RSVP method, the SS may reserve bandwidth for the next message along with each REQ message. For example, the SS may transmit a bandwidth reservation for ZZZ_REQ 514 message along with the YYY_REQ 504 message. In addition, the SS may build 512 the ZZZ_REQ message while waiting to receive uplink allocations for it.

The above procedure may be repeated for all the subsequent request messages, wherein in each request message, the SS sends bandwidth reservation information for the next message.

In the mobile WiMAX standard, an uplink allocation for frame N is directed to the next frame (i.e., frame N+1). Therefore, if an SS receives a successful response (RSP) message and an UL allocation in frame N, the SS may transmit the next REQ in the next frame N+1. As shown in Figure 5, the BS transmits the XXX_RSP message 508 and the UL allocation message 510 (i.e., UL-MAP) for the next request message (i.e., YYY_REQ 504) in the same frame (i.e., frame N+1), and the SS transmits the YYY_REQ message 504 in the next frame (i.e., frame N+2).

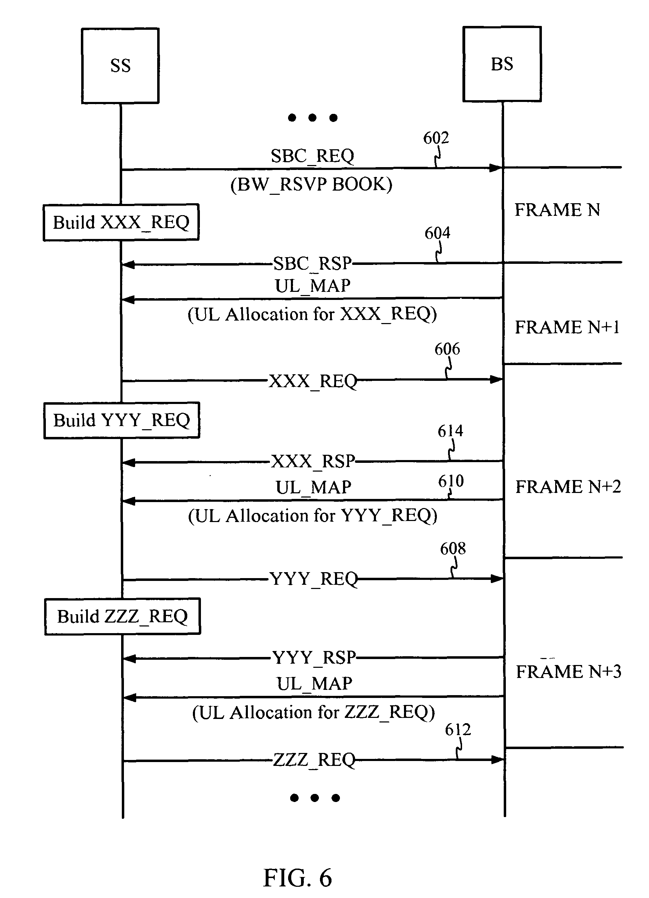

In figures 5 and 6, the messages XXX_REQ, YYY_REQ and ZZZ_REQ may refer to any type of MAC management messages, such as RNG_REQ, SBC_REQ, PKM_REQ, REG_REQ, DSA_REQ, DSC_REQ or DSD_REQ.

Rather than interactively providing BW-RSVP information for a single REQ message at each stage, the SS may request for bandwidth non-interactively. Therefore, the SS may transmit the BW-RSVP information for a plurality of subsequent request messages or "a book of bandwidth reservation information" in a single bandwidth reservation request message.

Figure 6 illustrates example message exchange for a non-interactive bandwidth reservation request (NBW-RSVP) in accordance with certain embodiments set forth herein. When using NBW-RSVP, the SS may transmit a BW-RSVP book that specifies BW-RSVP information for a plurality of subsequent request messages to the BS.

For certain embodiments, the BW-RSVP book may be transmitted during the capability negotiation stage. Accordingly, as shown in Figure 6, the SS may transmit the BW-RSVP book along with an SS Basic Capabilities Request message (SBC_REQ 602). Once the BS receives the SBC_REQ message 602, the BS determines if a BW-RSVP book is included in the SBC_REQ message or not. Once the BS detects the BW-RSVP information, the BS saves the information specified in the book, such as the number of bytes required for each of the plurality of subsequent messages. The BS may use the information in bandwidth reservation book for scheduling UL allocation for a set of subsequent request messages to be transmitted from the SS. Once the information is saved, the BS transmits an SBC_RSP 604 to inform the SS that the booking capability is accepted. Along with the SBC_RSP message, the BS also sends an uplink allocation for the next REQ message (XXX_REQ 606) to the SS.

Thereafter, when the BS sends a response to each MAC management REQ message to the SS, the BS also assigns uplink resources (via a UL-MAP) for the next REQ to be transmitted. The BS may use the information in the saved BW-RSVP information book, such as the number of required bytes and frame offset for the next message to assign uplink resources to the next message. As shown, when the SS receives an XXX_RSP 614, the SS determines if the BS also sends a UL-MAP 610 specifying the UL allocation for the next request message (YYY_REQ 608) to be transmitted.

If an UL-MAP 610 message is detected, the SS sends the next REQ message (i.e., YYY_REQ 608) using the UL allocation specified by the UL-MAP 610 message. As shown, the YYY_REQ message may be sent without sending the BW-RSVP for the next request message (e.g., ZZZ_REQ 612), because the bandwidth reservation information about the next message is already known by the BS from the bandwidth reservation book. In contrast, in IBW-RSVP method, the SS may send bandwidth reservation information for each of the subsequent messages with a current request message.

<u>Exemplary Mathematical Description</u>

Taking into account all the standard sequences and the bandwidth request-bandwidth grant (BR-BG) processes, the total network entry and network reentry delays may be calculated as follows:

$$D_{total}^{NE} = \sum_{\{i \in NE\}} N(i)\{D_{BW\_RT}(i) + D_{REQ}(i)\} + M(i)D_{RSP}(i)$$

*where*

$$D_{BW\_RT}(i) = D_{CDMA\_BR}(i) + D_{CDMA\_Alloc}(i) + D_{BR}(i) + D_{UL\_Alloc}(i),$$

$$D_{REQ}(i) = B_{REQ}(i) + P_{REQ}(i),$$

$$D_{RSP}(i) = B_{RSP}(i) + P_{RSP}(i).$$

where $D_{total}^{NE}$ denotes the total initial network entry delay, and $D_{total}^{NRE}$ denotes the total network re-entry delay.

The $D_{total}^{NE}$ may consist of processing delay occurring at each stage from the synchronization with a BS to the connection setup for data communication. Typical stages required in Mobile WiMAX include OFDMA ranging, capability negotiation, secure key exchanges and dynamic service additions for DL and UL transport connections.

$N(i)$ represents the number of transmissions required for an SS to finish the stage *i* in the network entry. In a typical case, only one transmission may be required to finish each network entry stage, however, in a worst-case scenario, the number of transmissions may increase up to a maximum value for that specific procedure.

$D_{BW-RT}(i)$ represents the delay from transmission of a CDMA Bandwidth Request message to reception of a Bandwidth Grant message. $D_{REQ}(i)$ is the processing delay to transmit the ith request message REQ(i). $D_{UL-Alloc}(i)$ is the transmission relevance delay, which is an interval between the UL-MAP notification time and the actual UL allocation time. In a fixed WiMAX network, the minimum relevance delay may be 2ms. In a mobile WiMAX network, the minimum relevance delay may be the length of at least one frame duration. For example, when the frame duration is 5ms, and the DL and UL partitioning ratio is 2:1, the relevance delay may be close to 8.3ms.

*M(i)* is the number of transmissions required for a BS to finish a stage i in the network entry. In a typical case, only one transmission may be required to finish each network entry stage, however, in a worst-case scenario, the number of transmissions may increase up to a maximum value for that specific procedure. $B_{REQ}(i)$ and $P_{REQ}(i)$ are the build time and processing time for *the $i^{th}$* request message REQ(i), respectively.

By using the techniques described above, the delay from bandwidth request/bandwidth grant message exchange at each network entry and network reentry stage can be reduced. For example, the delay between receiving RSP and transmitting next REQ can typically take eight frames, which is 40ms in Mobile WiMAX. This example is based on the assumption that the BS can finish bandwidth request processing and scheduling within one frame, which is a realistically achievable best-case scenario for bandwidth request and grant.

In the proposed bandwidth reservation techniques described above (i.e., IBW-RSVP and NBW-RSVP), as shown in Figures 5-6, however, the delay can be reduced to two frames, which is equivalent to 10ms for Mobile WiMAX. This delay is the minimum bound that can be achieved without violating the IEEE 802.16e/Mobile WiMAX specifications. Comparing the proposed techniques with the best-case scenario using an ordinary technique, six frames per each set of request and response handshaking messages may be saved.

The proposed bandwidth reservation techniques can be applied to each stage required for network entry and network reentry. In situations where there are no error or exception cases, the SS may go through an 8-sequence REQ and RSP management over the air message handshake to finish network entry procedures. In this case, 240ms (8*6 frame) of delay can be saved. When there are more handshakes involved in the procedures because of errors and further processing in negotiation, security key settings, registration and/or creating more service flows, the gain using the proposed techniques may increase linearly.

The various operations of methods described above may be performed by various hardware and/or software component(s) and/or module(s) corresponding to means-plus-function blocks illustrated in the figures. Generally, where there are methods illustrated in figures having corresponding counterpart means-plus-function figures, the operation blocks correspond to means-plus-function blocks with similar numbering. For example, operations 300 and 400 illustrated in FIGs. 3 and 4 correspond to means-plus-function blocks 300A and 400A illustrated in FIGs. 3A and 4A.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

Information and signals may be represented using any of a variety of different technologies and techniques. For example, data, instructions, commands, information, signals and the like that may be referenced throughout the above description may be represented by voltages, currents, electromagnetic waves, magnetic fields or particles, optical fields or particles or any combination thereof.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to embodiments of the present disclosure, other and further embodiments of the disclosure may be devised without departing from the basic scope thereof, and the scope thereof is determined by the claims that follow.

## Claims

1. A method (300) for requesting uplink bandwidth by a subscriber station (106) in a wireless communication system (100), comprising:

   transmitting (302) a request message (602) including a bandwidth reservation for at least one uplink allocation for at least one subsequent request message (606) to be transmitted, wherein the request message (602) transmitted includes a bandwidth reservation book that specifies the bandwidth reservation for a plurality of subsequent request messages (606, 610, 612) to be transmitted;
   receiving (304) a response message (604) and at least one uplink allocation for the at least one subsequent request message; and
   transmitting (306) the at least one subsequent request message, in accordance with the at least one uplink allocation received via the response message.

2. A method (400) for allocating an uplink bandwidth to a subscriber station (106) in a wireless communications system (100), comprising:

   receiving (402) a request message (602) including a bandwidth reservation for at least one uplink allocation for at least one subsequent request message (606) to be transmitted, wherein the request message received includes a bandwidth reservation book that specifies the bandwidth reservation for a set of subsequent request messages (606, 610, 612) to be transmitted;
   transmitting (404) a response message (604) and at least one uplink allocation for the at least one subsequent request message; and
   receiving (406) the at least one subsequent request message, in accordance with the at least one uplink allocation transmitted via the response message.

3. An apparatus (300A) for requesting uplink bandwidth by a subscriber station (106) in a wireless communication system (100), comprising:

   means (302A) for transmitting a request message (602) including a bandwidth reservation for at least one uplink allocation for at least one subsequent request message (606) to be transmitted, wherein the request message (602) transmitted includes a bandwidth reservation book that specifies the bandwidth reservation for a plurality of subsequent request messages (606, 610, 612) to be transmitted;

means (304A) for receiving a response message (604) and at least one uplink allocation for the at least one subsequent request message; and

means (306A) for transmitting the at least one subsequent request message, in accordance with the at least one uplink allocation received via the response message.

4. The method of claim 1, or the apparatus of claim 3, wherein the bandwidth reservation book is transmitted in the request message during a capability negotiation stage.

5. The method of claim 1, or the apparatus of claim 3, wherein the at least one uplink allocation is received via at least one UL-MAP message in one or more downlink subframes.

6. The method of claim 1, or the apparatus of claim 3, wherein the bandwidth reservation includes a number of bytes required to transmit the at least one subsequent request message.

7. The method of claim 1, or the apparatus of claim 3, wherein the bandwidth reservation is embedded in a payload of the request message using a type length value (TLV) format.

8. An apparatus (400A) for allocating an uplink bandwidth to a subscriber station (106) in a wireless communications system (100), comprising:

means (402A) for receiving a request message (602) including a bandwidth reservation for at least one uplink allocation for a subsequent request message (606) to be transmitted, wherein the request message received includes a bandwidth reservation book that specifies the bandwidth reservation for a set of subsequent request messages (606, 610, 612) to be transmitted;

means (404A) for transmitting a response message (604) and at least one uplink allocation for the at least one subsequent request message; and

means (406A) for receiving the at least one subsequent request message, in accordance with the at least one uplink allocation transmitted via the response message.

9. The method of claim 2, or the apparatus of claim 8, wherein the bandwidth reservation book is received in the request message during a capability negotiation stage.

10. The method of claim 2, or the apparatus of claim 8, wherein the at least one uplink allocation is transmitted via at least one UL-MAP message in one or more downlink subframes.

11. The method of claim 2, or the apparatus of claim 8, wherein the bandwidth reservation includes a number of bytes required to transmit the at least one subsequent request message.

12. The method of claim 2, or the apparatus of claim 8, wherein the response message and an uplink allocation are transmitted in a same frame.

13. A computer program product comprising a computer-readable medium having instructions stored thereon, the instructions being executable by one or more processors and the instructions comprising:

instructions for carrying out the method steps of any of claims 1, 2, 4 to 7, or 9 to 12.

**Patentansprüche**

1. Ein Verfahren (300) zum Anfragen von Uplink- bzw. Aufwärtsverbindungsbandbreite durch eine Teilnehmerstation (106) in einem drahtlosen Kommunikationssystem (100), wobei das Verfahren Folgendes aufweist:

Senden bzw. Übertragen (302) einer Anfragenachricht (602), die eine Bandbreitenreservierung für mindestens eine Aufwärtsverbindungszuteilung für mindestens eine nachfolgende Anfragenachricht (606) beinhaltet, die gesendet bzw. übertragen werden soll, wobei die gesendete Anfragenachricht (602) ein Bandbreitenreservierungsbuch beinhaltet, das die Bandbreitenreservierung für eine Vielzahl von nachfolgenden Anfragenachrichten (606, 610, 612), die gesendet werden sollen, beinhaltet;

Empfangen (304) einer Antwortnachricht (604) und mindestens einer Aufwärtsverbindungszuteilung für die mindestens eine nachfolgende Anfragenachricht; und

Senden (306) der mindestens einen nachfolgenden Anfragenachricht gemäß der mindestens einen Aufwärtsverbindungszuteilung, die über die Antwortnachricht empfangen wird.

2. Verfahren (400) zum Zuteilen einer Uplink- bzw. Aufwärtsverbindungsbandbreite an eine Teilnehmerstation (106) in einem Drahtloskommunikationssystem (100), wobei das Verfahren Folgendes aufweist:

Empfangen (402) einer Anfragenachricht (602), die eine Bandbreitenreservierung für mindestens eine Aufwärtsverbindungszuteilung für mindestens eine nachfolgende Anfragenachricht (606) beinhaltet, die gesendet werden soll, wobei die empfangene Anfragenachricht ein Bandbreitenreservierungsbuch beinhaltet, das die Bandbreitenreservierung für einen Satz von nachfolgenden Anfragenachrichten (606, 610, 612), die gesendet werden sollen, spezifiziert;

Senden bzw. Übertragen (404) einer Antwortnachricht (604) und mindestens einer Aufwärtsverbindungszuteilung für die mindestens eine nachfolgende Anfragenachricht; und

Empfangen (406) der mindestens einen nachfolgenden Anfragenachricht gemäß der mindestens einen Aufwärtsverbindungszuteilung, die über die Antwortnachricht gesendet bzw. übertragen wird.

3. Vorrichtung (300A) zum Anfragen von Aufwärtsverbindungsbandbreite durch eine Teilnehmerstation (106) in einem Drahtloskommunikationssystem (100), die Folgendes aufweist:

Mittel (302A) zum Senden bzw. Übertragen einer Anfragenachricht (602), die eine Bandbreitenreservierung für mindestens eine Aufwärtsverbindungszuteilung für mindestens eine nachfolgende Anfragenachricht (606), die gesendet bzw. übertragen werden soll, beinhaltet, wobei die gesendete Anfragenachricht (602) ein Bandbreitenreservierungsbuch enthält, dass die Bandbreitenreservierung für eine Vielzahl von nachfolgenden Anfragenachrichten (606, 610, 612), die gesendet werden sollen, beinhaltet;

Mittel (304A) zum Empfangen einer Antwortnachricht (604) und mindestens einer Aufwärtsverbindungszuteilung für die mindestens eine nachfolgende Antwortnachricht; und

Mittel (306A) zum Senden der mindestens einen nachfolgenden Antwortnachricht gemäß der mindestens einen Aufwärtsverbindungszuteilung, die über die Antwortnachricht empfangen wurde.

4. Verfahren nach Anspruch 1 oder Vorrichtung nach Anspruch 3, wobei das Bandbreitenreservierungsbuch in der Anfragenachricht während einer Fähigkeiten-Aushandlungsstufe übertragen bzw. gesendet wird.

5. Verfahren nach Anspruch 1 oder Vorrichtung nach Anspruch 3, wobei die mindestens eine Aufwärtsverbindungszuteilung über mindestens eine UL-MAP-Nachricht in einem oder mehreren Downlink- bzw. Abwärtsverbindungssubrahmen empfangen wird.

6. Verfahren nach Anspruch 1 oder Vorrichtung nach Anspruch 3, wobei die Bandbreitenreservierung eine Anzahl von Bytes beinhaltet, die benötigt wird, um die mindestens eine nachfolgende Anfragenachricht zu senden bzw. zu übertragen.

7. Verfahren nach Anspruch 1 oder Vorrichtung nach Anspruch 3, wobei die Bandbreitenreservierung in Nutzdaten der Anfragenachricht unter Verwendung eines Typlängenwertformats bzw. TLV-Formats (TLV = type length value) eingebettet ist.

8. Eine Vorrichtung (400A) zum Zuteilen einer Uplink- bzw. Aufwärtsverbindungsbandbreite an eine Teilnehmerstation (106) in einem Drahtloskommunikationssystem (100), wobei die Vorrichtung Folgendes aufweist:

Mittel (402A) zum Empfangen einer Anfragenachricht (602), die eine Bandbreitenreservierung für mindestens eine Aufwärtsverbindungszuteilung für eine nachfolgende Anfragenachricht (606), die gesendet bzw. übertragen werden soll, beinhaltet , wobei die empfangene Anfragenachricht ein Bandbreitenreservierungsbuch beinhaltet, das die Bandbreitenreservierung für einen Satz von nachfolgenden Anfragenachrichten (606, 610, 612), die gesendet bzw. übertragen werden sollen, beinhaltet;

Mittel (404A) zum Senden einer Antwortnachricht (604) und mindestens einer Aufwärtsverbindungszuteilung für die mindestens eine nachfolgende Anfragenachricht; und

Mittel (406A) zum Empfangen der mindestens einen nachfolgenden Anfragenachricht gemäß der mindestens einen Aufwärtsverbindungszuteilung, die über die Antwortnachricht gesendet bzw. übertragen wurde.

9. Verfahren nach Anspruch 2 oder Vorrichtung nach Anspruch 8, wobei das Bandbreitenreservierungsbuch in der Anfragenachricht während einer Fähigkeitenaushandlungsstufe empfangen wird.

10. Verfahren nach Anspruch 2 oder Vorrichtung nach Anspruch 8, wobei die mindestens eine Aufwärtsverbindungszuteilung über die mindestens eine UL-MAP-Nachricht in einem oder mehreren Abwärtsverbindungssubrahmen gesendet bzw. übertragen wird.

11. Verfahren nach Anspruch 2 oder Vorrichtung nach Anspruch 8, wobei die Bandbreitenreservierung eine Anzahl von Bytes beinhaltet, die erforderlich sind, um die mindestens eine nachfolgende Anfragenachricht zu senden.

12. Verfahren nach Anspruch 2 oder Vorrichtung nach Anspruch 8, wobei die Antwortnachricht und eine Aufwärtsverbindungszuteilung in dem gleichen Rahmen gesendet werden.

13. Computerprogrammprodukt, das ein computerlesbares Medium mit darauf gespeicherten Instruktionen aufweist, wobei die Instruktionen von einem oder mehreren Prozessoren ausgeführt werden können und wobei die Instruktionen Folgendes aufweisen:

Instruktionen zum Durchführen der Verfahrensschritte nach einem der Ansprüche 1, 2, 4 bis 7 oder 9 bis 12.

**Revendications**

1. Procédé (300) pour requérir une largeur de bande de liaison montante par un poste d'abonné (106) dans un système de communication sans fil (100), comprenant :

émettre (302) un message de requête (602) incluant une réservation de largeur de bande pour au moins une allocation de liaison montante pour au moins un message de requête suivant (606) à émettre, le message de requête (602) émis incluant une table de réservation de largeur de bande qui spécifie la réservation de largeur de bande pour une pluralité de messages de requête suivants (606, 610, 612) à émettre ;
recevoir (304) un message de réponse (604) et au moins une allocation de liaison montante pour ledit au moins un message de requête suivant ; et
émettre (306) ledit au moins un message de requête suivant, en accord avec ladite au moins une allocation de liaison montante reçue par l'intermédiaire du message de réponse.

2. Procédé (400) pour allouer une largeur de bande de liaison montante à un poste d'abonné (106) dans un système de communication sans fil (100), comprenant :

recevoir (402) un message de requête (602) incluant une réservation de largeur de bande pour au moins une allocation de liaison montante pour au moins un message de requête suivant (606) à émettre, le message de requête reçu incluant une table de réservation de largeur de bande qui spécifie la réservation de largeur de bande pour un ensemble de messages de requête suivants (606, 610, 612) à émettre ;
émettre (404) un message de réponse (604) et au moins une allocation de liaison montante pour ledit au moins un message de requête suivant ; et
recevoir (406) ledit au moins un message de requête suivant, en accord avec ladite au moins une allocation de liaison montante transmise par l'intermédiaire du message de réponse.

3. Dispositif (300A) pour requérir une largeur de bande de liaison montante par un poste d'abonné (106) dans un système de communication sans fil (100), comprenant :

des moyens (302A) pour émettre un message de requête (602) incluant une réservation de largeur de bande pour au moins une allocation de liaison montante pour au moins un message de requête suivant (606) à émettre, le message de requête (602) émis incluant une table de réservation de largeur de bande qui spécifie la réservation de largeur de bande pour une pluralité de messages de requête suivants (606, 610, 612) à émettre ;
des moyens (304A) pour recevoir un message de réponse (604) et au moins une allocation de liaison montante pour ledit au moins un message de requête suivant ; et
des moyens (306A) pour émettre ledit au moins un message de requête suivant en accord avec ladite au moins une allocation de liaison montante reçue par l'intermédiaire du message de réponse.

**4.** Procédé selon la revendication 1 ou dispositif selon la revendication 3, dans lequel la table de réservation de largeur de bande est émise dans le message de requête dans une étape de négociation de capacité.

**5.** Procédé selon la revendication 1 ou dispositif selon la revendication 3, dans lequel ladite au moins une allocation de liaison montante est reçue par l'intermédiaire d'au moins un message UL-MAP dans une ou plusieurs sous-trames de liaison descendante.

**6.** Procédé selon la revendication 1 ou dispositif selon la revendication 3, dans lequel la réservation de largeur de bande comprend un nombre de multiplets requis pour émettre ledit au moins un message de requête suivant.

**7.** Procédé selon la revendication 1 ou dispositif selon la revendication 3, dans lequel la réservation de largeur de bande est logée dans une partie de charge utile du message de requête en utilisant un format de valeur de longueur et de type (TLV).

**8.** Dispositif (400A) pour allouer une largeur de bande de liaison montante à un poste d'abonné (106) dans un système de communication sans fil (100), comprenant :

des moyens (402A) pour recevoir un message de requête (602) incluant une réservation de largeur de bande pour au moins une allocation de liaison montante pour au moins un message de requête suivant (606) à émettre, le message de requête reçu incluant une table de réservation de largeur de bande qui spécifie la réservation de largeur de bande pour un ensemble de messages de requête suivants (606, 610, 612) à émettre ;

des moyens (404A) pour émettre un message de réponse (604) et au moins une allocation de liaison montante pour ledit au moins un message de requête suivant ; et

des moyens (406A) pour recevoir ledit au moins un message de requête suivant, en accord avec ladite au moins une allocation de liaison montante transmise par l'intermédiaire du message de réponse.

**9.** Procédé selon la revendication 2 ou dispositif selon la revendication 8, dans lequel la table de réservation de largeur de bande est reçue dans le message de requête dans une étape de négociation de capacité.

**10.** Procédé selon la revendication 2 ou dispositif selon la revendication 8, dans lequel ladite au moins une allocation de liaison montante est transmise par l'intermédiaire d'au moins un message UL-MAP dans une ou plusieurs sous-trames de liaison descendante.

**11.** Procédé selon la revendication 2 ou dispositif selon la revendication 8, dans lequel la réservation de largeur de bande comprend un nombre de multiplets requis pour émettre ledit au moins un message de requête suivant.

**12.** Procédé selon la revendication 2 ou dispositif selon la revendication 8, dans lequel le message de réponse et une allocation de liaison montante sont transmis dans une même trame.

**13.** Programme d'ordinateur comprenant un milieu lisible par l'ordinateur dans lequel sont mémorisées des instructions, les instructions étant exécutables par un ou plusieurs processeurs et les instructions comprenant des instructions pour mettre en oeuvre les étapes de procédé de l'une quelconque des revendications 1, 2, 4 à 7 ou 9 à 12.

FIG. 1

FIG. 2

EP 2 366 257 B1

300

┌─────────────────────────────────────────────┐ ⌐302
│ TRANSMIT A REQUEST MESSAGE INCLUDING A BANDWIDTH │
│ RESERVATION FOR UPLINK ALLOCATION FOR AT LEAST ONE │
│ SUBSEQUENT REQUEST MESSAGE TO BE TRANSMITTED │
└─────────────────────────────────────────────┘
                      │
                      ▼
┌─────────────────────────────────────────────┐ ⌐304
│ RECEIVE A RESPONSE MESSAGE INCLUDING THE UPLINK │
│ ALLOCATION FOR THE AT LEAST ONE SUBSEQUENT REQUEST │
│ MESSAGE │
└─────────────────────────────────────────────┘
                      │
                      ▼
┌─────────────────────────────────────────────┐ ⌐306
│ TRANSMIT THE AT LEAST ONE SUBSEQUENT REQUEST │
│ MESSAGE, IN ACCORDANCE WITH THE UPLINK ALLOCATION │
│ RECEIVED VIA THE RESPONSE MESSAGE │
└─────────────────────────────────────────────┘

## FIG. 3

300A

┌─────────────────────────────────────────────┐ ⌐302A
│ MEANS FOR TRANSMITTING A REQUEST MESSAGE │
│ INCLUDING A BANDWIDTH RESERVATION FOR UPLINK │
│ ALLOCATION FOR AT LEAST ONE SUBSEQUENT REQUEST │
│ MESSAGE TO BE TRANSMITTED │
└─────────────────────────────────────────────┘
                      │
                      ▼
┌─────────────────────────────────────────────┐ ⌐304A
│ MEANS FOR RECEIVING A RESPONSE MESSAGE │
│ INCLUDING THE UPLINK ALLOCATION FOR THE AT LEAST │
│ ONE SUBSEQUENT REQUEST MESSAGE │
└─────────────────────────────────────────────┘
                      │
                      ▼
┌─────────────────────────────────────────────┐ ⌐306A
│ MEANS FOR TRANSMITTING THE AT LEAST ONE SUBSEQUENT │
│ REQUEST MESSAGE, IN ACCORDANCE WITH THE UPLINK │
│ ALLOCATION RECEIVED VIA THE RESPONSE MESSAGE │
└─────────────────────────────────────────────┘

## FIG. 3A

400

RECEIVE A REQUEST MESSAGE INCLUDING A BANDWIDTH RESERVATION FOR UPLINK ALLOCATION FOR A SUBSEQUENT MESSAGE TO BE TRANSMITTED /402

TRANSMIT A RESPONSE MESSAGE WITH THE UPLINK ALLOCATION FOR THE AT LEAST ONE SUBSEQUENT REQUEST MESSAGE /404

RECEIVE AT LEAST ONE SUBSEQUENT REQUEST MESSAGE, IN ACCORDANCE WITH THE UPLINK ALLOCATION TRANSMITTED VIA THE RESPONSE MESSAGE /406

FIG. 4

400A

MEANS FOR RECEIVING A REQUEST MESSAGE INCLUDING A BANDWIDTH RESERVATION FOR UPLINK ALLOCATION FOR A SUBSEQUENT MESSAGE TO BE TRANSMITTED /402A

MEANS FOR TRANSMITTING A RESPONSE MESSAGE WITH THE UPLINK ALLOCATION FOR THE AT LEAST ONE SUBSEQUENT REQUEST MESSAGE /404A

MEANS FOR RECEIVING AT LEAST ONE SUBSEQUENT REQUEST MESSAGE, IN ACCORDANCE WITH THE UPLINK ALLOCATION TRANSMITTED VIA THE RESPONSE MESSAGE /406A

FIG. 4A

FIG. 5

FIG. 6

**EP 2 366 257 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9824250 A2
- EP 0912016 A2
- WO 0052950 A1
- US 2007002819 A1